# EUROPÄISCHE PATENTSCHRIFT

(11) **EP 3 536 430 B1**
(45) Veröffentlichungstag und Bekanntmachung des Hinweises auf die Patenterteilung: **01.07.2020**
(21) Anmeldenummer: 19160864.5
(22) Anmeldetag: 05.03.2019
(51) Int. Cl.: B23B 31/117

(54) **VERFAHREN UND VORRICHTUNG ZUR VERBESSERUNG DER KOAXIALITÄT UND BELASTBARKEIT EINER AUS EINER RINGFÖRMIG GESCHLOSSENEN AUFNAHME UND EINER AUFWEIT- BZW. ZUSAMMENDRÜCKBAREN HÜLSE BESTEHENDEN KEGELVERBINDUNG**
METHOD AND DEVICE FOR IMPROVING THE CONCENTRICITY AND STRESS-TOLERANCE OF CONICAL FITTING MADE UP OF AN ANNULARLY CLOSED CONTAINER AND A COMPRESSIBLE AND EXPANDABLE SLEEVE
PROCÉDÉ ET DISPOSITIF D'AMÉLIORATION DE LA COAXIALITÉ ET DE LA CAPACITÉ DE CHARGE D'UN RACCORDEMENT CONIQUE COMPORTANT UN LOGEMENT SOUS LA FORME D'ANNEAU FERMÉ ET UN MANCHON POUVANT ÊTRE ÉLARGI OU COMPRIMÉ

(30) Priorität: 07.03.2018 EP 18160471
(43) Veröffentlichungstag der Anmeldung: 11.09.2019
(73) Patentinhaber: Knäbel, Horst, 40667 Meerbusch (DE)
(72) Erfinder: Knäbel, Horst, 40667 Meerbusch (DE)
(74) Vertreter: Willems, Volker

(56) Entgegenhaltungen:
- EP-A1- 2 650 081
- WO-A1-99/16568

## Beschreibung

Die vorliegende Erfindung betrifft ein Verfahren zur Verbesserung der Koaxialität und Belastbarkeit einer aus einer Aufnahme und einer aufweit-bzw. zusainmendrückbaren Hülse bestehenden Kegelverbindung.

Insbesondere in der Spanntechnik gibt es zahlreiche Kegelverbindungen bei denen eine radial aufweitbare Hülse auf einen Aufnahmedorn gedrückt wird, um den äußeren Durchmesser der Hülse zu vergrößern und so ein auf die Hülse aufgesetztes Werkstück oder Werkzeug zu fixieren und kraftschlüssig zu spannen, oder bei denen eine radial zusammendrückbare Hülse in die kegelförmige Bohrung einer Aufnahmehülse gedrückt wird, um den Durchmesser der Hülsenbohrung zu reduzieren und so ein in die Hülse eingeführtes Werkstück oder Werkzeug zu fixieren und kraftschlüssig zu spannen.

In der nachfolgenden Beschreibung werden die Begriffe Aufnahmedorn und Aufnahmehülse unter der Bezeichnung Aufnahme zusammengefasst Und da mit einer solchen Einrichtung in gleicher Weise Werkstücke wie auch Werkzeuge fixiert und gespannt werden können, werden nachfolgend diese Begriffe zur Bezeichnung Werkstück verschmolzen.

Eine solche Hülse kann ein rotationssymmetrisches, mit Längsschlitzen versehenes Spannelement, ein aus Stahlsegmenten und aufvulkanisierten Gummizwischenlagen zusammengefügtes Spannelement oder ein aus Tragstegen mit elastischen Zwischengliedern bestehendes Spannelement sein. Durch die Schlitze, Gummizwischenlagen und elastischen Zwischenglieder wird die Hülse in Stege aufgeteilt, über die Spannkraft von der Aufnahme an das Werkstück übertragen wird.

Aufgrund der axialen Aufeinanderzubewegung von Hülse und Aufnahme beim Spannen treffen kegelförmige Flächen mit unterschiedlichen Radien aufeinander, so dass sich die Spannkraft vom Zentrum der Stege auf deren Randzonen hin verlagert und zwischen dem Zentrum der einzelnen Stege und der ihnen gegenüberliegenden Wandung der Aufnahme einen Spalt entstehen lässt, der mit zunehmender Aufeinanderzubewegung von Hülse und Aufnahme überproportional ansteigt.

Infolge dessen kommt es zu einem unkontrollierbaren Anstieg der Flächenbelastung im Bereich der weniger präzis gefertigten Stegkanten. Dies wiederum führt zur Deformation und zum Verschleiß der Stegkanten und demzufolge zu einer unkontrollierbaren und zunehmenden Verschlechterung der Koaxialität zwischen der Aufnahme und dem Werkstück. Dieser Effekt wird noch verstärkt wenn es sich dabei um eine Spanneinrichtung handelt, die fortwährend geöffnet und geschlossen werden muss.

In der EP 2650081 A1 wird ein Verfahren zur Bearbeitung einer Werkstückoberfläche mit Hilfe eines Finishwerkzeugs beschrieben. Dabei wird die Werkstückoberfläche um eine Werkstückachse gedreht. Der Relativbewegung von Werkstückoberfläche zu einer Wirkfläche des Werkszeugs wird eine oszillierende Zusatzbewegung in einer zu der Werkstückoberfläche senkrechten Richtung überlagert.

Die WO 99/16568 A1 offenbart eine Spannzange zum Greifen eines Werkstücks und ein Verfahren zur Herstellung der Spannzange. Die Spannzange umfasst einen ringförmigen Spannzangenkörper mit einer Vielzahl von sich teileweise durch den Spannzangenkörper erstreckenden radialen Schlitzen. Weiterhin umfasst der Spannzangenkörper eine sich radial durch den Spannzangenkörper erstreckende Öffnung. Durch Auseinanderdrücken oder Zusammendrücken der Endflächen der Öffnung fixiert eine Werkstückgreiffläche des Spannzangenkörpers ein Werkstück.

Der vorliegenden Erfindung liegt deshalb die Aufgabe zugrunde, ein Verfahren zu entwickeln mit dem es möglich ist, die Koaxialität zu verbessern, die Verbesserung unabhängig vom Spannbereich zu machen, die spezifische Flächenpressung zu mindern und damit den Verschleiß deutlich zu reduzieren.

Zur Lösung dieser Aufgabe wird gemäß der Erfindung bei einer Kegelverbindung gemäß der eingangs beschriebenen Gattung vorgeschlagen, dass die Radien eines äußeren Kegels stets gleich oder größer den Radien eines inneren Kegels der Kegelverbindung ausgeführt werden.

Der äußere Kegel wird auf einer Werkzeugmaschine, insbesondere einem Schleifgerät, bearbeitet, deren radiale Zustellung von einer synchron zur Werkstückdrehzahl und Stegfolge verlaufende Zusatzbewegung überlagert ist. Die Zusatzbewegung weist einen sinusförmigen Verlauf auf. Hierbei ist die Amplitude der Zusatzbewegung über den Radius und den in Anspruch genommenen Winkel des Grundkreises variierbar.

Die Zusatzbewegung wird als Stellsignal an die Maschinensteuerung übertragen. Die Zusatzbewegung wird hierbei über einen separaten, direkt mit der Werkzeugmaschine, insbesondere dem Schleifgerät gekoppelten Stellantrieb übertragen, wobei der Stellantrieb fest mit der radialen Zustellung des Schleifgeräts verbundenen ist.

Eine Vorrichtung zur Durchführung des Verfahrens, welche nicht Teil der Erfindung ist, weist eine Werkzeugmaschine, insbesondere ein Schleifgerät, und einen Stellantrieb auf, wobei der Stellantrieb, insbesondere ein separater Stellantrieb, als Piezoaktor ausgeführt und über seine Ansteuerung synchron mit der Maschinensteuerung verbunden ist. Der Stellantrieb kann als eine mechanische, die Ansteuerung realisierende Einrichtung ausgeführt sein.

Die Erfindung sowie weitere Vorteile derselben werden nachfolgend anhand der Zeichnungen in den Figuren 1 bis 7 näher erläutert.

Dabei zeigen:
Fig. 1 eine Schnittansicht einer Kegelverbindung als Spanneinrichtung für ein Werkstück, das über seine Bohrung fixiert wird.
Fig. 2 einen vergrößerten Ausschnitt des Bereichs A der Fig. 1
Fig. 3 einen vergrößerten Ausschnitt des Bereichs B der Fig. 1
Fig. 4 eine Schnittansicht einer Kegelverbindung als Spanneinrichtung für ein Werkstück, das über seinen Außendurchmesser fixiert wird.
Fig. 5 einen vergrößerten Ausschnitt des Bereichs C der Fig. 4
Fig. 6 einen vergrößerten Ausschnitt des Bereichs D der Fig. 4
Fig. 7 eine Prinzipdarstellung der Bearbeitung einer kegelförmigen Hülsen- oder Aufnahme-Bohrung auf einer Innenschleifmaschine.

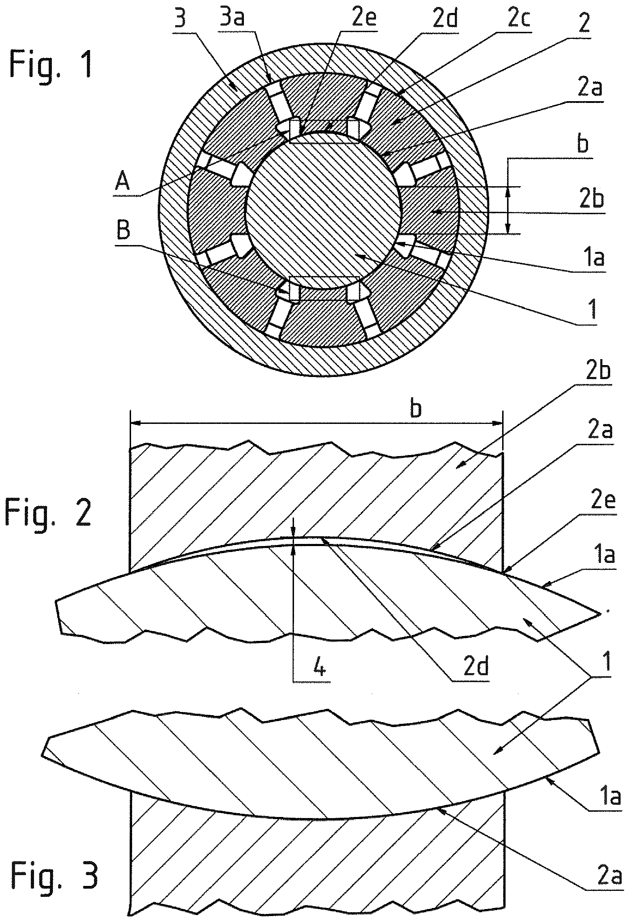

Die in Figur 1 dargestellte Kegelverbindung umfasst eine Aufnahme 1, die hier als kegelförmiger Dorn ausgebildet ist und eine Hülse 2, die sich mit ihrer kegelförmigen Bohrung 2a über ihre Stege 2b auf der Aufnahme 1 abstützt, während ihr zylindrischer Außendurchmesser 2c in die Bohrung 3a eines zu fixierenden oder zu spannenden Werkstücks 3 ragt.

Entsprechend der Aufgabe einer Kegelverbindung sollen die vorerst lose zusammengefügten Teile in einem sogenannten Spannvorgang kraftschlüssig mit einander verbunden werden.

Dies geschieht in dem die Hülse 2 und/oder die Aufnahme 1 zueinander axial verschoben werden, so dass hierbei die Hülse 2 mit ihrer kegelförmigen Bohrung 2a über ihre Stege 2b auf eine kegelförmige, äußere Mantelfläche 1a der Aufnahme 1 trifft und so weit aufgeweitet wird, bis der Kraftschluss über ihren zylindrischen Außendurchmesser 2c zum Werkstück 3 hergestellt ist.

Das heißt, dass die aufweitbare Hülse 2 mit ihrem kleineren Kegel auf den größeren Kegel der Aufnahme 1 gedrückt wird. Demzufolge kommt es zur Berührung unterschiedlicher Radien, so dass sich der Kraftschluss vom Zentrum 2d der Stege 2b auf deren Randzonen 2e hin verlagert, so wie dies in der oberen Hälfte der Figur 1 und vergrößert in Figur 2 dargestellt ist. Auf diese Weise entsteht ein Spalt 4 zwischen den Stegen 2b der Hülse 2, der sich entsprechend der gegebenen Stegbreite b mit zunehmender Aufweitung der Hülse 2 überproportional vergrößert.

Durch die Kraftschlussverlagerung kommt es aber auch zu einem starken Anstieg der spezifischen Flächenbelastung in den Randzonen 2e der Stege 2b und damit auch zu einer unkontrollierbaren Koaxialitätsabweichung zwischen der Aufnahme 1 und der Hülse 2, die sich negativ auf den Rundlauf des Werkstücks 3 auswirkt. In diesem Zusammenhang ist auch zu beachten, dass die Kanten und Seitenflächen der Stege 2b im Bereich der Randzonen 2e in der Praxis weitaus unpräziser ausgeführt sind und die Kanten der Stege 2b durch die hohe spezifische Flächenbelastung unkontrollierbar deformiert und im Laufe der Zeit mehr und mehr verschleißen.

Um diese Nachteile zu beseitigen wird erfindungsgemäß vorgeschlagen und wie in der unteren Hälfte der Figur 1 sowie in Figur 3 dargestellt, dass die Radien des äußeren Kegels, in diesem Fall sind dies die Radien der kegelförmigen Bohrung 2a der Hülse 2, stets gleich oder größer den Radien des inneren Kegels, in diesem Fall sind es die Radien der kegelförmigen, äußeren Mantelfläche 1a der Aufnahme 1, ausgeführt werden.

Damit wird eine Verlagerung des Kraftschlusses auf die Randzonen 2e der Stege 2b vermieden und ein direkter Kraftschluss zwischen Aufnahme 1 und der Hülse 2 über ihre Stege 2a zum Werkstück 3 gewährleistet sowie bei einer konzentrischen Endbearbeitung, das bedeutet einer Endbearbeitung des zylindrischen Außendurchmessers 2c der Hülse 2 mit der kegelförmigen Bohrung 2a der Hülse 2 in einer Aufspannung, eine nahezu 100-prozentige Koaxialität zwischen der Aufnahme 1 und der Bohrung 3a des Werkstücks 3 erzielt.

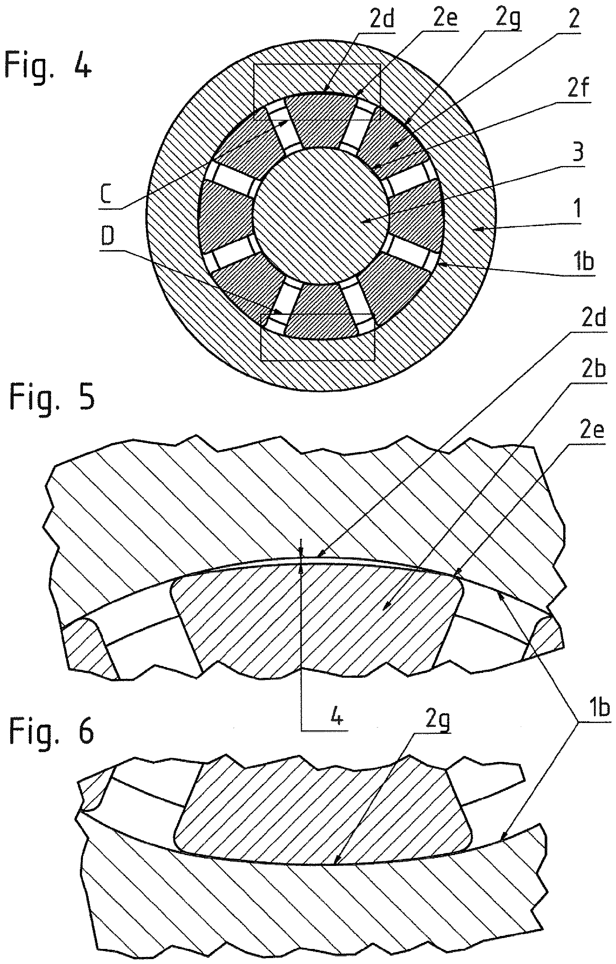

Die Figur 4 zeigt eine ähnliche Kegelverbindung bestehend aus einer Aufnahme 1 und einer Hülse 2, die in diesem Fall eine zylindrische Bohrung 2f aufweist, in der sich das zu spannende Werkstück 3 befindet. Auch hier wird während des Spannvorgangs die Hülse 2 und die Aufnahme 1 axial zueinander verschoben, so dass nun die Hülse 2 soweit zusammengedrückt wird bis es zum Kraftschluss zwischen der Aufnahme 1, der Hülse 2 und dem Werkstück 3 kommt. Wie in der oberen Hälfte der Figur 4 und vergrößert in Figur 5 dargestellt, kommt es ebenso zu einer Kraftschlussverlagerung vom Zentrum 2d der Stege 2b zu deren Randzonen 2e mit den bereits geschilderten Nachteilen. In ähnlicher Weise wie bei der Beschreibung der Figuren 1, 2 und 3 erwähnt, können auch hier die auftretenden Nachteile behoben werden, indem die Radien des äußeren Kegels, dies sind in diesem Fall die Radien der kegelförmigen Bohrung 1b der Aufnahme 1, stets gleich oder größer den Radien des inneren Kegels, in diesem Fall sind es die Radien der kegelförmigen, äußeren Mantelfläche 2g der Hülse 2, ausgeführt werden.

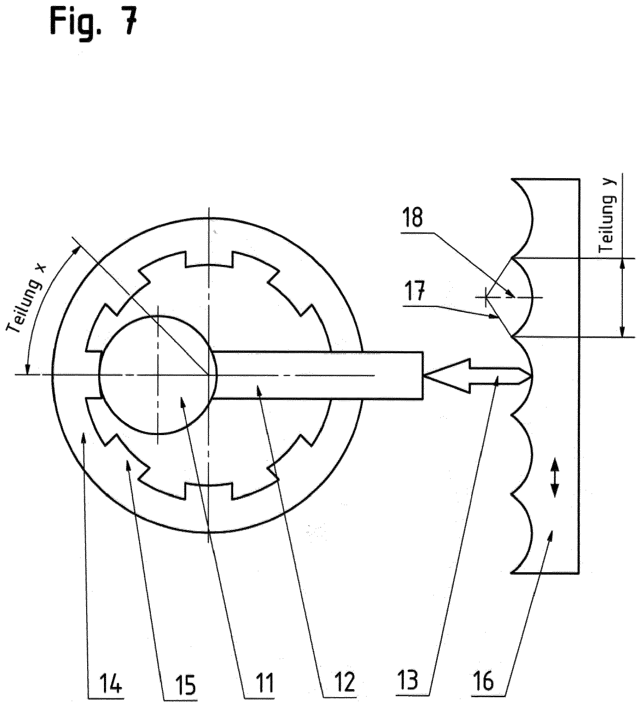

Um diese vorerwähnte Radiusvergrößerung ausführen zu können, wird vorgeschlagen, eine für die Endbearbeitung vorgesehene Werkzeugmaschine so herzurichten, dass sie dem in Figur 7 dargestellten prinzipiellen Aufbau entspricht. Die Figur 7 zeigt in vereinfachter Darstellung eine Vorrichtung zum Ausschleifen der entsprechenden kegelförmigen Bohrungen. Die Schleifscheibe 11 mit ihrer Lagerung 12 wird über die nur schematisch dargestellte Zustellung 13 an die Wandung der zu bearbeitenden Bohrung geführt. In Figur 7 sind die Aufnahme 1 bzw. die Hülse 2 als ringförmiger Körper 14 mit nach innen gerichteten Stegen 15 dargestellt.

Die Zustellung 13 kann sowohl rein softwaremäßig als auch softwaremäßig mit separatem Stellorgan oder rein mechanisch erfolgen. In allen Fällen muss die Zustellung 13 synchron sowie positionsorientiert zur Werkstückdrehzahl und Stegfolge verlaufen. Das heißt die Teilungen x und y müssen aufeinander abgestimmt und zeitlich gleich lang sein.

Bei einer rein softwaremäßigen Zustellung 13 erfolgt die Ansteuerung über ein synchron auf die Werkstückdrehzahl und Stegfolge ausgerichtetes Signal an die Maschinensteuerung.

Es hat sich gezeigt, dass bei einem ringförmigen Körper 14 mit acht Stegen 15 und einer in Figur 7 schematisch dargestellten sinusförmigen Ansteuerung 16, über einen Winkel 17 von +/- 60° bei einem Radius 18 von 50 µm eine vom Bohrungsdurchmesser nahezu unabhängige Radiusvergrößerung von 0,3 mm erzielbar ist. Das heißt, dass sich eine solche Keilverbindung bis zu 0,6 mm aufweiten lässt, ohne dass es zur Bildung des vorerwähnten Spaltes 4 zwischen den sich berührenden kegelförmigen Flächen kommen kann.

Bei einer softwaremäßigen Zustellung 13 mit separatem Stellorgan wird dieses direkt mit der Lagerung 12 der Schleifscheibe 11 verbunden auf den Schleifspindelstock montiert. Das beispielweise als Piezoaktor ausgeführte Stellorgan wird dabei ebenfalls synchron zur Werkstückdrehzahl und Stegfolge angesteuert, so dass es die Schleifscheibe 11 rhythmisch zur Stegfolge zustellt. Bei dieser Art der Zustellung besteht auch die Möglichkeit den Stellweg durch einen Festanschlag im Bereich des Sinus-Nulldurchgangs zu begrenzen.

Bei einer rein mechanischen Zustellung 13 ist das Stellorgan ebenfalls direkt mit der Lagerung 12 der Schleifscheibe 11 verbunden auf dem Schleifspindelstock montiert, jedoch ist der Antrieb des Stellorgans hierbei direkt mit dem Werkstückantrieb gekoppelt, so dass die mechanische Zustellung, beispielweise über Hebel, Nocken oder dergleichen ebenfalls synchron zur Werkstückdrehzahl und Stegfolge erfolgt.

### Bezugszeichenliste

- 1: Aufnahme
- 1a: kegelförmige, äußere Mantelfläche der Aufnahme
- 1b: kegelförmige Bohrung der Aufnahme
- 2: Hülse
- 2a: kegelförmige Bohrung der Hülse
- 2b: Steg der Hülse
- 2c: zylindrischer Außendurchmesser der Hülse
- 2d: Zentrum des Stegs der Hülse
- 2e: Randzone des Stegs der Hülse
- 2f: zylindrische Bohrung der Hülse
- 2g: kegelförmige, äußere Mantelfläche der Hülse
- b: Stegbreite
- 3: Werkstück
- 3a: Bohrung des Werkstücks
- 4: Spalt
- 11: Schleifscheibe
- 12: Lagerung
- 13: Zustellung
- 14: ringförmiger Körper
- 15: nach innen gerichtete Stege
- 16: sinusförmige Ansteuerung
- 17: Winkel
- 18: Radius
- X und y: Teilung

## Patentansprüche

1. Verfahren zur Verbesserung der Koaxialität und Belastbarkeit einer aus einer Aufnahme (1) und einer Längsschlitze aufweisenden, aufweit- bzw. zusammendrückbaren. Hülse (2) umfassenden Kegelverbindung, wobei die Radien des äußeren Kegels (2a, 1b) stets gleich oder größer den Radien eines inneren Kegels (1a, 2g) ausgeführt werden, wobei die Kegel auf einer Werkzeugmaschine bearbeitet werden, deren radiale Zustellung (13) über eine zusätzliche Ansteuerung (16) erfolgt, die eine radial variierbare, sinusförmige, synchron sowie positionsorientierte zur Werkstückdrehzahl und Stegfolge ausgerichtete Zusatzbewegung erzeugt.

2. Verfahren nach Anspruch 1, wobei die Zusatzbewegung als Stellsignal an die Maschinensteuerung übertragen wird.

3. Verfahren nach Anspruch 1 oder 2, wobei die Zusatzbewegung Über einen separaten Stellantrieb erfolgt, der mit der Zustelleinrichtung der Werkzeugmaschine fest verbunden ist.

## Claims

1. A method for improving the coaxiality and resilience of a cone connection comprising a receptacle (1) and an expandable or compressible sleeve (2) with longitudinal slots, the radii of the outer cone (2a, 1b) always being equal to or greater than the radii of an inner cone (1a, 2g), the cones being machined on a machine tool, which radial infeed (13) is carried out via an additional control (16), which generates a radially variable, sinusoidal, synchronous and position-oriented additional movement aligned to the work piece rotational speed and web sequence.

2. The method according to claim 1, wherein the additional movement is transmitted as a control signal to the machine control.

3. The method according to claim 1 or 2, wherein the additional movement is carried out via a separate actuator which is fixedly connected to the infeed device of the machine tool.

## Revendications

1. Procédé destiné à l'amélioration de la coaxialité et de la résistance d'une connexion conique, comprenant un logement porte-pièce (1) et un manchon (2) présentant des fentes longitudinales, pouvant être soit compressé soit élargi, les rayons du cône extérieur (2a, 1b) présentant une configuration toujours égale ou plus grande que les rayons d'un cône intérieur (1a, 2g), le cône étant usiné dans une machine-outil dont l'avancée radiale (13) s'effectue par l'intermédiaire d'un dispositif de commande supplémentaire (16) qui génère un déplacement supplémentaire sinusoïdal, pouvant varier radialement, qui est synchrone et positionné par rapport à la vitesse de rotation de la pièce à usiner et de la suite de ponts.

2. Procédé selon la revendication 1, le déplacement supplémentaire étant transmis au dispositif de commande de la machine sous forme de signal de réglage,

3. Procédé selon la revendication 1 ou 2, le déplacement supplémentaire étant effectué par l'intermédiaire d'un servomoteur séparé, solidaire du dispositif d'avancée de la machine-outil.
